# EUROPEAN PATENT APPLICATION

(11) **EP 2 787 467 A1**
(43) Date of publication of application: **08.10.2014**
(21) Application number: 13795146.3
(22) Date of filing: 07.05.2013
(51) Int. Cl.: G06K 7/00

(54) **CLOTH-BASED ELECTRONIC TAG AND MANUFACTURING METHOD THEREFOR**

(30) Priority: 31.01.2013 CN 201310037194
(71) Applicant: Shenzhen Hyan Microelectronics Co., Ltd., Shenzhen Guangdong 518108 (CN)
(72) Inventor: TENG, Yujie, Shenzhen, Guangdong 518108 (CN); ZHANG, Shifan, Shenzhen, Guangdong 518108 (CN); TENG, Yudong, Shenzhen, Guangdong 518108 (CN)
(74) Representative: Hellmich, Wolfgang
(86) International application number: PCT/CN2013/075233
(87) International publication number: WO 2014/117449

(57) **Abstract**

The invention relates to a fabric matrix RFID tag and a method for manufacturing the same. The method comprises the following steps: S1. manufacturing a plastically encapsulated RFID unit; S2. spinning or sewing a coupling antenna on a fabric matrix sheet by using metal wire yarns; and, S3. fixing the plastically encapsulated RFID unit in a position where a coupling portion of the coupling antenna is disposed on the fabric matrix sheet to form an RFID tag. In the invention, a coupling antenna is formed on the fabric matrix material by sewing and then the coupling antenna together with the plastically encapsulated RFID unit forms a fabric matrix RFID tag, thus breaking through restrictions on the application of the traditional RFID tags. The fabric matrix RFID tag obtained according to the method may be washed with water, dry-cleaned and randomly rubbed and kneaded, and acid and alkali resistant.

## Description

### TECHNICAL FIELD OF THE INVENTION

The invention relates to a manufacturing technique of an RFID antenna and an RFID tag, specifically to a fabric matrix RFID tag and a method for manufacturing the same, which is mainly applied to radio frequency identification of clothes and leather products.

### BACKGROUND OF THE INVENTION

Currently, tags applied to clothes and leather products are almost contained in labels. One-dimensional and two-dimensional bar code tags are printed in labels, and even RFID tags are also placed in labels. Actually, as labels and clothes are detachable, so it is unable to realize a real sense of traceability on the production and circulation processes of products and of identification of products.

The real difficulty lies in that the general materials and processes for manufacturing RFID tags may not be in accordance with production characteristics and service characteristics of fabric matrix materials of clothes, for example, RFID tags may not be washed with water, rubbed and kneaded or acid and alkali resistant.

### SUMMARY OF THE INVENTION

In order to avoid the above deficiencies of the existing RFID tag technique, the invention provides a fabric matrix RFID tag and a method for manufacturing the same. Such fabric matrix RFID tag may meet requirements on identification of clothes and leather products to protect rights and interests of manufacturers and consumers.

A method for manufacturing a fabric matrix RFID tag provided in the invention comprises the following steps:

S1. manufacturing an RFID unit (or called Pip Tag), and forming a plastically encapsulated RFID unit that is encapsulated by a plastic casing by an insert molding or drop molding process;

S2. spinning or sewing a coupling antenna of a certain shape on a fabric matrix sheet by using metal wire yarns as bobbin threads; and,

S3. fixing the plastically encapsulated RFID unit in a position where a coupling portion of the coupling antenna is disposed on the fabric matrix sheet, and forming an RFID tag by radio frequency coupling.

Wherein, the fabric matrix sheet may be made of cotton fabric, chemical fabric or leather or the like.

The coupling antenna is a folded dipole or a half-wave dipole or the like.

A core wire of the metal wire yarn is stainless steel wire or copper wire, the diameter of which is 0.02-0.045mm.

The metal wire yarn is replaceable by metal wire, for example, stainless steel wire or copper wire with a diameter of 0.02-0.045mm.

The RFID unit may be manufactured by traditional processes. The RFID unit mainly comprises a base membrane, a radiating antenna disposed on the base membrane and a radio frequency IC connected with an opening of the radiating antenna.

The RFID unit is formed into a plastically encapsulated RFID unit by plastic encapsulation or drop molding process, and the plastic casing of the RFID unit may be in a shape of various buttons and product labels.

A fabric matrix RFID tag manufactured by the above method comprises:

a plastically encapsulated RFID unit comprising a plastic casing and an RFID unit (Pip Tag) plastically encapsulated in the plastic casing, the RFID unit being formed of a base membrane, a radiating antenna disposed on the base membrane and a radio frequency IC connected with an opening of the radiating antenna; and,

a fabric matrix coupling antenna comprising a fabric matrix sheet and a coupling antenna formed on the fabric matrix sheet by spinning or sewing by using metal wire yarns as bobbin threads, the plastically encapsulated RFID unit being fixed in a position where a coupling portion of the coupling antenna is disposed on the fabric matrix sheet.

Wherein, the plastic casing is preferably in a shape of a button. It may also be in various shapes, such as rectangular, circular, elliptical or rhombic labels.

The radiating antenna is in a shape of open rectangle, open circle, open ellipse or open polygon.

The coupling antenna may be a folded dipole or a half-wave dipole.

The coupling antenna may comprise a folded dipole with two open ends respectively connected with a fold line portion, and a middle part of a top rail portion of the folded dipole extends downward to form a pair of fold line coupling portions that are radio frequency coupled with the plastically encapsulated RFID unit.

In the invention, the RFID unit is formed into a plastically encapsulated RFID unit by plastic encapsulation, and the fabric matrix coupling antenna is formed on the fabric matrix by spinning or sewing with metal wire yarns or metal wires, thus breaking through restrictions on the application of the traditional RFID tags. The method is especially suitable for manufacturing split UHF tags for clothes and leather products. Such tags are suitable for use under conditions the same as the service and storage environments of clothes, and may be washed with water, dry-cleaned, randomly rubbed and kneaded, folded and acid and alkali resistant.

During the manufacture of clothes or leather products in garment factories or leather factories, the fabric matrix RFID tag provided in the invention may be sewn on the clothes or leather products directly and even sewn in the interlayer of the clothes, and used along with the clothes and leather products, thereby realizing the identification of the clothes and leather products.

The plastic casing of the plastically encapsulated RFID unit may be in a shape of various buttons and products labels, so that the plastic casing is easy to match with the clothes and leather products in terms of shape and color.

### BRIEF DESCRIPTION OF THE DRAWINGS

Fig. 1 is a structure diagram of an embodiment 1 of the invention;
Fig. 2 is a structure diagram of a plastically encapsulated RFID unit of Fig.1;
Fig. 3 is a diagram of an RFID unit in the plastically encapsulated RFID unit of Fig. 2;
Fig. 4 is a structure diagram of a fabric matrix coupling antenna of Fig. 1;
Fig. 5 is a diagram of an application example of the embodiment 1;
Fig. 6 is a structure diagram of an embodiment 2 of the invention;
Fig. 7 is a structure diagram of a plastically encapsulated RFID unit of Fig. 6;
Fig. 8 is a diagram of an RFID unit in the plastically encapsulated RFID unit of Fig. 7;
Fig. 9 is a structure diagram of a fabric matrix coupling antenna of Fig. 6;
Fig. 10 is a diagram of an embodiment 3 of the invention;
Fig. 11 is a structure diagram of a plastically encapsulated RFID unit of Fig.10;
Fig. 12 is a diagram of an RFID unit in the plastically encapsulated RFID unit of Fig. 11; and
Fig. 13 is a structure diagram of a fabric matrix coupling antenna of Fig. 10.

### DETAILED DESCRIPTION OF THE INVENTION

The invention will be further described in details as below by embodiments.

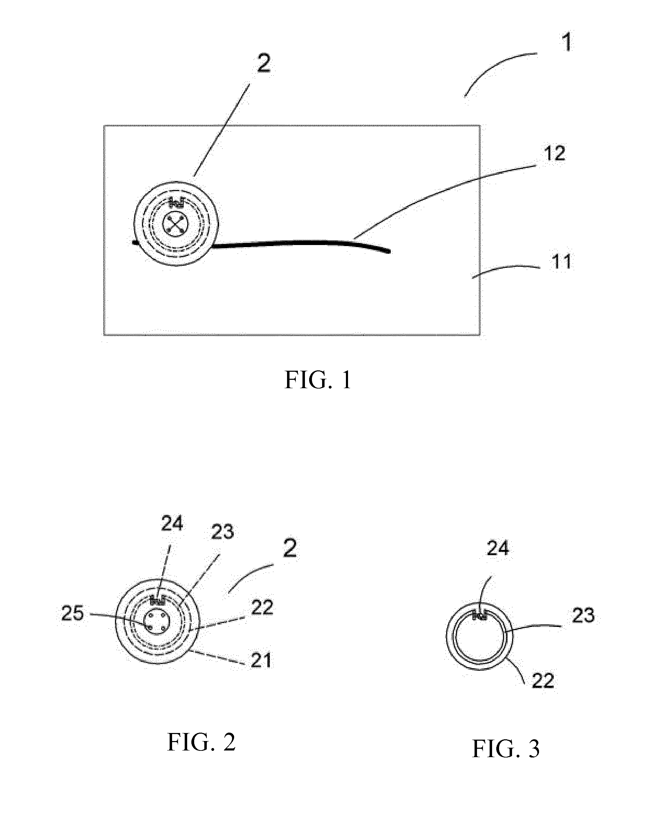

Referring to Fig. 1 to Fig. 4, a fabric matrix RFID tag in Embodiment 1 comprises a fabric matrix coupling antenna 1 and a plastically encapsulated RFID unit 2, the plastically encapsulated RFID unit 2 is in a shape of a circular button, and the central frequency of the plastically encapsulated RFID unit 2 during operating is UHF 900MHz.

As shown in Fig. 2 and Fig. 3, the plastically encapsulated RFID unit 2 comprises a plastic casing 21 in a shape of a circular button and an RFID unit (Pip Tag), the RFID unit is formed of a base membrane 22, a radiating antenna 23 disposed on the base membrane 22 and a radio frequency IC 24 connected with an opening of the radiating antenna 23, the radiating antenna 23 is in a shape of an open circle, and the radio frequency IC 24 is connected with the opening; and the RFID unit is plastically encapsulated inside the plastic casing 21.

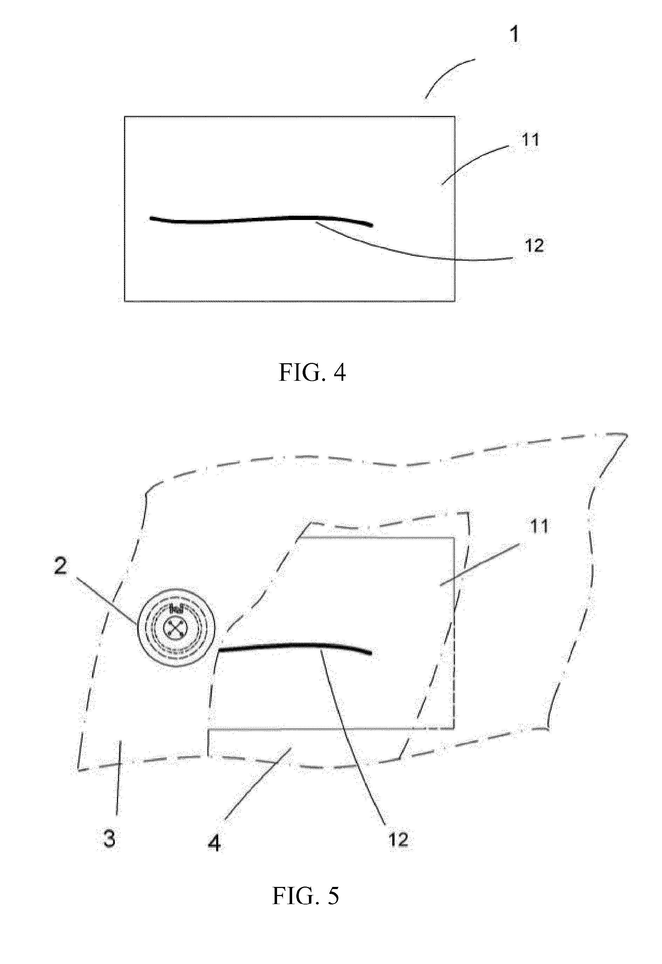

As shown in Fig. 4, the fabric matrix coupling antenna 1 comprises a fabric matrix sheet 11 and a coupling antenna 12 formed on the fabric matrix sheet 11 by spinning or sewing by using metal wire yarns as bobbin threads; the coupling antenna 12 is in a curve shape, being equivalent to a traditional half-wave dipole; and the coupling antenna 12 may also be a half-wave dipole in a straight line shape.

The plastically encapsulated RFID unit 2 is sewn on the fabric matrix sheet 11 of the fabric matrix coupling antenna 1 and is kept close to one end of the coupling antenna 12 in a curve shape, and the plastically encapsulated RFID unit 2 and the coupling antenna 12 form an RFID tag as shown in Fig. 1 by radio frequency coupling.

The process of manufacturing the fabric matrix RFID tag shown in Embodiment 1 is as follows.

### 1) A plastically encapsulated RFID unit 2 is manufactured.

First, an RFID unit is manufactured by traditional processes, a circular radiating antenna 23 is printed on a PET polyester membrane by sliver paste, and a chip is stuck on the circular radiating antenna. Or, the aluminum etching forming process may be adopted, the chip may be inversely stuck on the radiating antenna, and then the radiating antenna may be cut into an annular shape by die-cutting after cured.

Then, a plastic casing 21 in a button shape is molded by the insert molding process, at the same time the RFID unit is encapsulated to form a plastically encapsulated RFID unit 2 in a button shape (referring to Fig. 2) at one time, which may also be realized by embedding the RFID unit into a button of appropriate size.

### 2) A fabric matrix coupling antenna 1 is formed.

A coupling antenna 12 in a curve shape as shown in Fig. 4 is embroidered on the fabric matrix material by a computerized embroidery machine by using metal-wire-coated polyester yarns or metal wires as bobbin threads and common nylon threads as top threads.

Wherein, the fabric matrix material is selected from cotton fabric, chemical fabric and the like. It may also be replaceable by leather. The metal wire may be stainless steel wire or copper wire with a diameter of 0.035mm.

3) The plastically encapsulated RFID unit 2 in a button shape is sewn on the fabric matrix coupling antenna 1 obtained in Step 2), and is kept close to one end of the coupling antenna 12 in a curve shape to form the RFID tag (referring to Fig. 1).

The tag of Embodiment 1 may be applied to identification of clothes, leather products and other products.

When used on clothes, the tag may be sewn in the interlayer, inner layer, collar, cuff or spare button. If other symbols are also printed on the fabric matrix material, the tag may be used together with the symbols.

When the tag is used on leather products, the fabric matrix material may be replaced with leather, the fabric matrix coupling antenna may also be manufactured by the above process, and the tag may be sewn in the inner side or interlayer of the leather products.

Fig. 5 is a diagram of an example of application of the tag in Embodiment 1 to clothes. The plastically encapsulated RFID unit 2 is sewn in an inner surface layer 3 of the clothes, the fabric matrix coupling antenna 1 as shown in Fig. 4 is sewn on an interlayer 4 under the inner surface layer 3, and one end of the coupling antenna 12 in a curve shape is kept close to the plastically encapsulated RFID unit 2 to form the RFID tag.

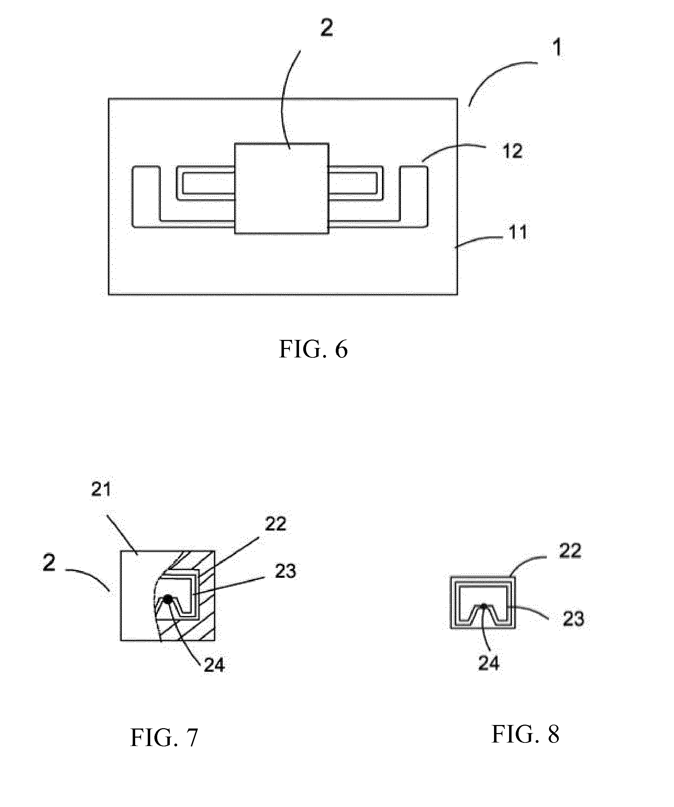

The fabric matrix RFID tag in Embodiment 2 is as shown in Fig. 6, comprising a fabric matrix coupling antenna 1 and a plastically encapsulated RFID unit 2.

As shown in Fig. 7 and Fig. 8, the plastically encapsulated RFID unit 2 comprises a plastic casing 21 and an RFID unit, the plastic casing 21 is in a shape of a square label (similar to a label on traditional clothes), and the RFID unit is formed of a base membrane 22, a radiating antenna 23 disposed on the base membrane 22 and a radio frequency IC 24. The radiating antenna 23 is square as a whole, and a lower edge of the radiating antenna 23 is bent inward to form a concave portion with an opening in the middle. The radio frequency IC 24 is connected with the opening, and the RFID unit is plastically encapsulated inside the plastic casing 21.

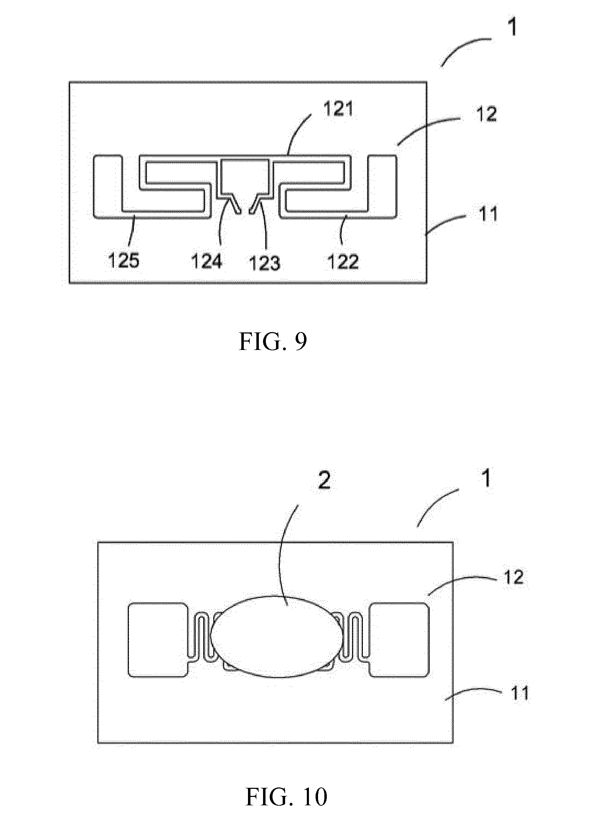

As shown in Fig. 9, the fabric matrix coupling antenna 1 comprises a fabric matrix sheet 11 and a coupling antenna 12 formed on the fabric matrix sheet 11 by spinning or sewing by using metal wire yarns as bobbin threads; and the coupling antenna 12 comprises a folded dipole 121 with two open ends respectively connected with fold line portions 122 and 125, ,and a middle part of a top rail portion of the folded dipole extends downward to form a pair of fold line coupling portions 123 and 124.

The plastically encapsulated RFID unit 2 is sewn on the fabric matrix sheet 11 of the fabric matrix coupling antenna 1 and covered on the fold line coupling portions 123 and 124 of the coupling antenna 12 to form the RFID tag (referring to Fig. 6).

The fabric matrix RFID tag in Embodiment 3 is as shown in Fig. 10, comprising a fabric matrix coupling antenna 1 and a plastically encapsulated RFID unit 2.

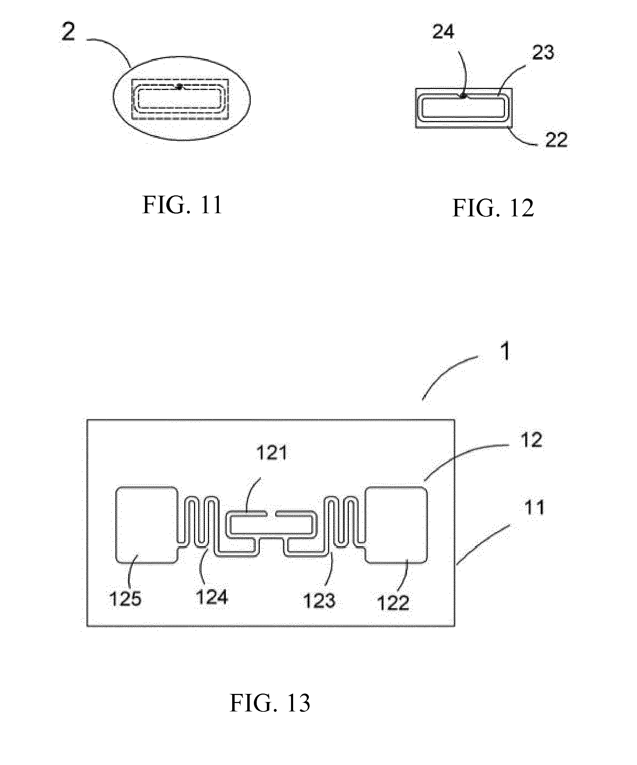

As shown in Fig. 11 and Fig. 12, the plastically encapsulated RFID unit 2 comprises a plastic casing 21 and an RFID unit, the plastic casing 21 is in a shape of an elliptical label (similar to an elliptical label of traditional clothes), and the RFID unit is formed of a base membrane 22, a radiating antenna 23 disposed on the base membrane 22 and a radio frequency IC 24; the radiating antenna 23 is in a shape of an open rectangle (or folded dipole), and the radio frequency IC 24 is connected with the opening; and the RFID unit is plastically encapsulated inside the plastic casing 21.

As shown in Fig. 13, the fabric matrix coupling antenna 1 comprises a fabric matrix sheet 11 and a coupling antenna 12 formed on the fabric matrix sheet 11 by spinning or sewing by using metal wire yarns as bobbin threads; and the coupling antenna 12 comprises a folded dipole 121 with an upward opening, and two ends of the folded dipole 121 are provided with two rectangular sheets 122 and 125, respectively. A middle part of a bottom rail portion of the folded dipole extends outward to form a pair of wavy line parts 123 and 124, and the free ends of the wavy line parts 123 and 124 are connected with the rectangular sheets 122 and 125, respectively.

The plastically encapsulated RFID unit 2 is sewn on the fabric matrix sheet 11 of the fabric matrix coupling antenna 1 and covered on the folded dipole 121 of the coupling antenna 12 to form the RFID tag (referring to Fig. 10).

The processes for manufacturing fabric matrix RFID tags in Embodiment 2 and Embodiment 3 are the same as that in Embodiment 1. The application of the fabric matrix RFID tags to clothes, leather products and other products in Embodiment 2 and Embodiment 3 is the same as that in Embodiment 1. For example, the fabric matrix RFID tags may be sewn beside an inner pocket inside a jacket and beside a spare button for use.

The invention breaks through restrictions on the application of traditional RFID tags. The method is especially suitable for manufacturing split UHF tags for clothes and leather products. As required, the plastic casing in the plastically encapsulated RFID unit of the invention may be designed to be in a shape of various buttons, and may also be designed into products labels of various shapes, such as rectangular, circular, elliptical or rhombic labels.

The injection molding process or the drop molding process may be employed for the plastic encapsulation of the RFID unit. The material for plastic encapsulation may be non-metal materials such as plastic, resin and silica gel in accordance with requirements on the acid and alkali resistance of the service environment. And, the color is selectable.

The radiating antenna may be designed to be in a shape of open rectangle, open circle, open ellipse or open polygon.

The coupling antenna in the fabric matrix coupling antenna may be a folded dipole or half-wave dipole, or a folded dipole or half-wave dipole with a coupling portion. The fabric matrix of the coupling antenna may be hand-woven and machine-woven, and preferably embroidered by a computerized embroidery machine.

## Claims

1. A method for manufacturing a fabric matrix RFID tag, comprising the following steps:
S1) manufacturing an RFID unit (or called Pip Tag), and forming a plastically encapsulated RFID unit that is encapsulated by a plastic casing by an insert molding or drop molding process;
S2) spinning or sewing a coupling antenna of a certain shape on a fabric matrix sheet by using metal wire yarns as bobbin threads; and
S3) fixing the plastically encapsulated RFID unit in a position where a coupling portion of the coupling antenna is disposed on the fabric matrix sheet, and forming an RFID tag by radio frequency coupling.

2. The method according to claim 1, wherein the fabric matrix sheet may be made of cotton fabric, chemical fabric or leather or the like.

3. The method according to claim 1, wherein the coupling antenna is a folded dipole or a half-wave dipole or the like; and the RFID unit mainly comprises a base membrane, a radiating antenna disposed on the base membrane and a radio frequency IC connected with an opening of the radiating antenna.

4. The method according to claim 1, wherein a core wire of the metal wire yarn is stainless steel wire or copper wire, the diameter of which is 0.02-0.045mm.

5. The method according to claim 1, wherein the metal wire yarn is replaceable by metal wire, for example, stainless steel wire or copper wire with a diameter of 0.02-0.045mm.

6. A fabric matrix RFID tag, comprising:
a plastically encapsulated RFID unit comprising a plastic casing and an RFID unit (Pip Tag) plastically encapsulated in the plastic casing, the RFID unit being formed of a base membrane, a radiating antenna disposed on the base membrane and a radio frequency IC connected with an opening of the radiating antenna; and
a fabric matrix coupling antenna comprising a fabric matrix sheet and a coupling antenna formed on the fabric matrix sheet by spinning or sewing by using metal wire yarns as bobbin threads, the plastically encapsulated RFID unit being fixed in a position where a coupling portion of the coupling antenna is disposed on the fabric matrix sheet.

7. The fabric matrix RFID tag according to claim 6, wherein the coupling antenna may be a folded dipole or a half-wave dipole.

8. The fabric matrix RFID tag according to claim 6, wherein the plastic casing is in a shape of a button or product label.

9. The fabric matrix RFID tag according to claim 8, wherein the radiating antenna is in a shape of open rectangle, open circle, open ellipse or open polygon.

10. The fabric matrix RFID tag according to claim 6, wherein the coupling antenna may be a folded dipole or a half-wave dipole.

11. The fabric matrix RFID tag according to claim 6, wherein the coupling antenna comprises a folded dipole with two open ends respectively connected with a fold line portion, and a middle part of a top rail portion of the folded dipole extends downward to form a pair of fold line coupling portions.
